Europäisches Patentamt

European Patent Office

Office européen des brevets

(19)

(11) Numéro de publication: **0 189 016**
**A1**

# (12) DEMANDE DE BREVET EUROPEEN

(21) Numéro de dépôt: 85870176.6

(22) Date de dépôt: 10.12.85

(51) Int. Cl.⁴: **C 21 C 5/46,** C 21 C 7/00

(30) Priorité: 18.12.84 BE 214176

(43) Date de publication de la demande: 30.07.86
Bulletin 86/31

(84) Etats contractants désignés: **AT DE FR GB IT LU NL SE**

(71) Demandeur: **COCKERILL SAMBRE Société Anonyme
dite:, Avenue Adolphe Greiner, 1, B-4100 Liege (Seraing)
(BE)**

(72) Inventeur: **van Helleputte, Jean-Claude, 1 rue des
Prêcheurs, B-6071 Châtelet (BE)**

(74) Mandataire: **Vanderperre, Robert et al, Bureau VANDER
HAEGHEN 63 Avenue de la Toison d'Or,
B-1060 Bruxelles (BE)**

(54) **Appareil déployable pour le montage et le démontage d'une lance de soufflage.**

(57) Un arbre vertical (1) est monté sur un vérin (5) afin de pouvoir coulisser axialement, cet arbre portant un premier bras (10) monté en sorte de pouvoir pivoter autour de l'arbre (1) et un second bras (12) est articulé autour d'un pivot (11) monté à l'extrémité libre du premier bras (10), l'extrémité libre du second bras présentant des ergots (13) sur sa face supérieure afin de coopérer avec des ouvertures formées dans les plateaux de liaison de la lance et du mannequin porte-lance.

## Appareil déployable pour le montage et le démontage d'une lance de soufflage

La présente invention concerne un appareil déployable destiné à faciliter le montage et le démontage d'une lance de soufflage.

Une lance de soufflage est un dispositif utilisé notamment en sidérurgie pour injecter dans l'acier en fusion recueilli dans les poches de coulée au moins un produit désulfurant, véhiculé par un gaz porteur. Une lance de soufflage, qui a une longueur de plusieurs mètres et un poids important, est suspendue à un support appelé mannequin porte-lance. Ce mannequin porte-lance est lui-même suspendu à un chariot élévateur monté sur une potence.

Lorsque l'on veut monter une lance ou la remplacer, il faut abaisser le mannequin porte-lance à l'aide du chariot élévateur, amener la lance en place sous le mannequin à l'aide d'engins de manutention, fixer la lance au mannequin et ensuite, faire remonter l'ensemble mannequin et lance jusqu'au niveau approprié. Pour remplacer une lance, il faut d'abord abaisser l'ensemble mannequin et lance jusqu'à ce que la lance repose sur le sol, détacher la lance du mannequin, ensuite effectuer le remplacement de la lance de la manière décrite ci-dessus et enfin faire remonter le mannequin avec la

2 0 189 016

nouvelle lance y suspendue. Toutes ces opérations sont
longues et délicates.

L'invention a pour objet un appareil peu encombrant
qui permet de monter et démonter une lance de soufflage
avec facilité, avec un gain de temps appréciable et
en utilisant moins de main d'oeuvre.

L'appareil selon l'invention comprend un arbre vertical
monté sur un vérin afin de pouvoir coulisser axialement,
un premier bras monté sur l'arbre en sorte de pouvoir
pivoter autour de celui-ci, un second bras articulé
autour d'un pivot monté à l'extrémité libre du premier
bras, l'extrémité libre du second bras présentant des
ergots sur sa face supérieure afin de coopérer avec
des ouvertures formées dans les plateaux de liaison
de la lance et du mannequin porte-lance.

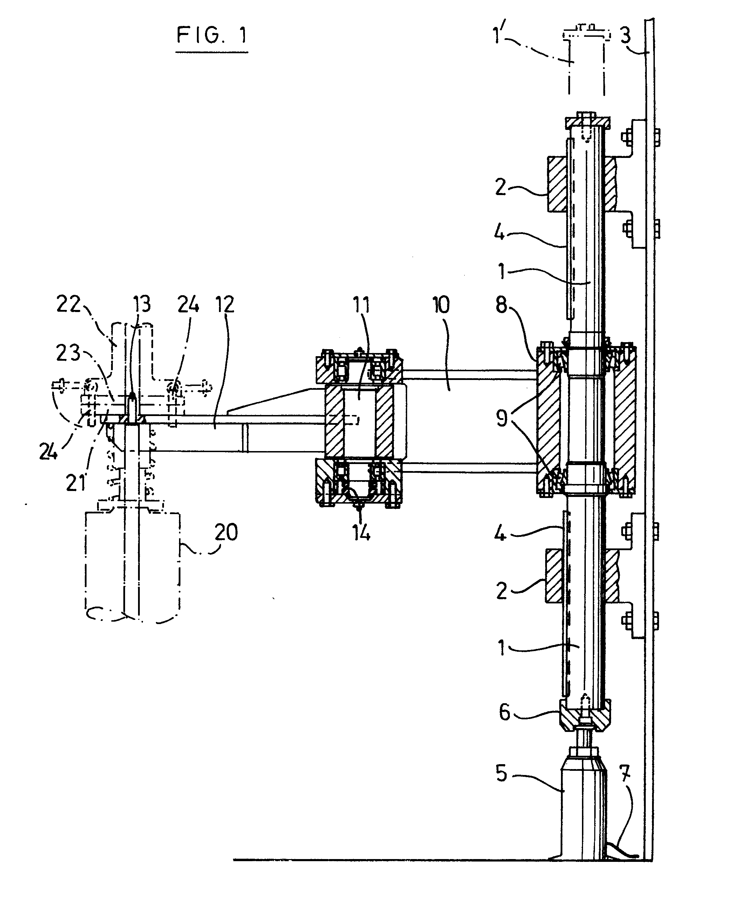

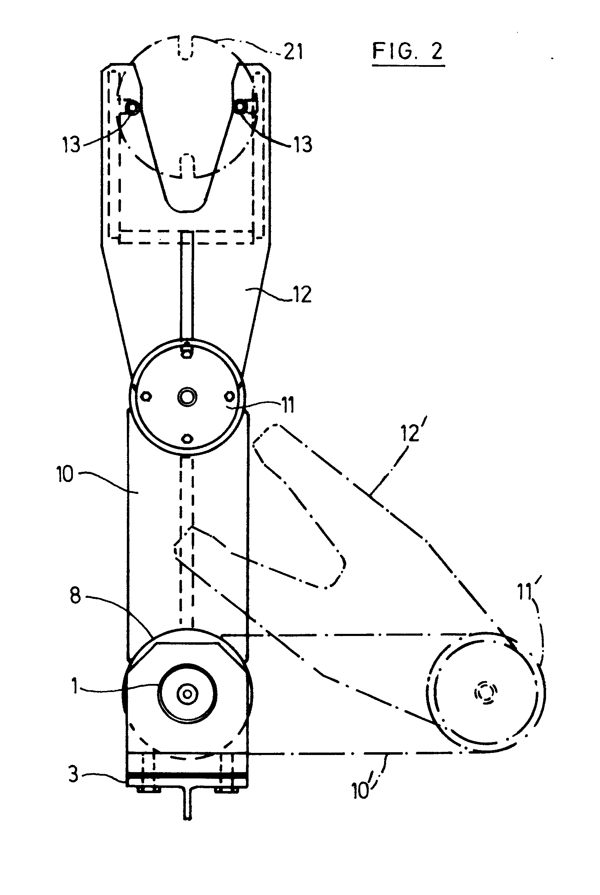

L'invention est exposée dans ce qui suit avec référence
aux dessins ci-annexés dans lesquels:
. la figure 1 est une vue en élévation avec coupes
partielles de l'appareil selon l'invention en position
déployée,
. la figure 2 est une vue en plan montrant l'appareil
de la figure 1 en position déployée et en position
repliée.

L'arbre 1 est maintenu en position par des étriers 2
fixés sur un bâti 3, l'arbre 1 pouvant coulisser dans
lesdits étriers. Des cales 4 fixées longitudinalement
sur l'arbre 1 et pouvant coulisser dans des rainures
de cale prévues dans les étriers 2 empêchent l'arbre 1
de pivoter autour de son axe longitudinal. L'arbre 1
est monté sur un vérin 5, par exemple un vérin hydraulique ou pneumatique,par l'intermédiaire d'un support 6.
La référence 7 désigne l'alimentation en fluide du vérin Sur l'arbre 1 est montée une bague 8 qui peut tourner coaxialement à cet arbre 1 grâce à des roulements à galets 9. La bague 8 porte un bras 10 qui s'étend transversalement à l'axe de la bague 8. A l'extrémité de ce bras 10 est monté un pivot 11 autour duquel est articulé un second bras 12 portant des ergots 13 destinés à s'engager dans des ouvertures ménagées dans les plateaux de liaison 21 et 23 d'une lance de soufflage 20 et du mannequin porte-lance 22. Le pivot 11 est monté sur un roulement à billes 14. On peut ainsi faire pivoter le bras 10 autour de l'arbre 1 et faire pivoter le bras 12 autour du pivot 11.

Lorsque l'appareil est inutilisé, les bras 10 et 12 sont normalement repliés comme montré en pointillé à la figure 2. Pour porter une lance de soufflage, on déploie les bras 10 et 12 en les faisant pivoter autour de l'arbre 1 et du pivot 11, amenant les ergots 13 à l'aplomb des ouvertures des plateaux 21 et 23. On alimente alors le vérin 5 afin de faire monter l'arbre 1 et d'amener ainsi les ergots 13 dans les ouvertures des plateaux 21 et 23 jusqu'à ce que le bras 12 soutienne la lance. Celle-ci peut alors être détachée du mannequin porte-lance et retirée après avoir fait redescendre l'arbre 1 et les bras 10 et 12 de manière à dégager les ergots 13 de leurs logements.

Cet appareil peut servir aussi bien au montage qu'au remplacement d'une lance. Sa manipulation est aisée et après emploi, il peut être replié et n'occuper ainsi qu'un espace très réduit.

4          0 189 016

REVENDICATIONS

1. Appareil déployable destiné à porter une lance de soufflage lors de son placement ou de son remplacement, caractérisé en ce qu'il comprend un arbre vertical (1) monté sur un vérin (5) afin de pouvoir coulisser axialement,
un premier bras (10) monté sur l'arbre (1) en sorte de pouvoir pivoter autour de celui-ci,
un second bras (12) articulé autour d'un pivot (11) monté à l'extrémité libre du premier bras (10), l'extrémité libre du second bras présentant des ergots (13) sur sa face supérieure afin de coopérer avec des ouvertures formées dans les plateaux de liaison de la lance et du mannequin porte-lance.

2. Appareil selon la revendication 1, dans lequel l'arbre (1) porte au moins une cale longitudinale (4) pour coulisser dans une rainure de cale prévue dans des étriers de support de l'arbre afin d'empêcher celui-ci de pivoter autour de son axe longitudinal.

3. Appareil selon la revendication 1, dans lequel le premier bras (10) est monté sur des roulements à galets (9) fixés sur le pourtour de l'arbre (1).

4. Appareil selon la revendication 1, dans lequel le pivot (11) autour duquel est articulé le second bras (12) est monté sur roulement à billes (14).

FIG. 1

FIG. 2

# Office européen des brevets

# RAPPORT DE RECHERCHE EUROPEENNE

**0 189 016**

EP 85 87 0176

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | FR-A- 584 411 (F. KRUPP) | | C 21 C 5/46<br>C 21 C 7/00 |
| A | FR-A-1 262 838 (KOPPERS) | | |
| A | US-A-4 326 701 (HAYDEN et al.) | | |
| A | US-A-3 891 196 (FÖRSTER et al.) | | |
| A | US-A-3 007 691 (RINESCH et al.) | | |
| A | US-A-2 886 308 (BOYNTON) | | **DOMAINES TECHNIQUES RECHERCHES (Int. Cl.4)** |
| A | DE-A-2 755 738 (KOCKUMS CONSTRUCTION) | | C 21 C 5/46<br>C 21 C 7/00 |

Le present rapport de recherche a été établi pour toutes les revendications

| Lieu de la recherche<br>BERLIN | Date d achevement de la recherche<br>17-04-1986 | Examinateur<br>SUTOR W |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publie a la date de dépôt ou après cette date
D : cité dans la demande
L : cité pour d'autres raisons

& : membre de la même famille, document correspondant

OEB Form 1503 03 82